# EUROPEAN PATENT APPLICATION

(11) **EP 1 402 797 A1**
(43) Date of publication of application: **31.03.2004**
(21) Application number: 03021060.3
(22) Date of filing: 18.09.2003
(51) Int. Cl.: A45C 15/00, A47D 1/00

(54) **Wheeled suitcase equipped with a seat for a small child**

(30) Priority: 27.09.2002 IT BO20020093
(71) Applicant: MINGANTI INTERNATIONAL LIMITED, Dublin 2 (IE)
(72) Inventor: Caldana, Marcus, 40128 Bologna (IT)
(74) Representative: Porsia, Dino, Dr.

(57) **Abstract**

The wheeled suitcase, particularly having dimensions that make it useful as hand luggage, is provided with, resting on its top wall, a preferably fold-away seat (2, 3) in which it is possible to place the small child (B) who is held securely in place by means of straps (6, 6') in such a way that the said suitcase can also be used temporarily as a pram.

## Description

Getting a small child around an airport or railway station is an extremely problematical operation if it has to be performed by one person alone even with very little baggage.

It is an object of the invention to solve this significant problem with the following idea for a solution. There are in existence suitcases of small dimensions that form part of the so-called hand luggage that can be taken on board the aircraft by the passenger, which can be pulled along on wheels and have a telescopic shaft which is extended when the suitcase is being rolled along on its own wheels but is pushed down when the suitcase is to be deposited in the luggage rack or lifted up and carried by the other handles with which it is usually provided. Such suitcases are commercially available, both rigid and semirigid, and strong enough to be able to support not only the weight of the objects stored in them but also that of an additional load, such as a large bag, which is usually placed on the actual suitcase against the shafts. The idea for a solution on which the innovation is based consists in fitting in a fixed or removable manner to the top of a wheeled suitcase, particularly one of permitted hand-luggage dimensions, and in such a way that it can be used until the moment of boarding, a preferably fold-away seat on which the small child can be placed, the child being held in position by means
of safety belts, and the said seat being located in a position such that the said child can use the telescopic shaft or shafts of the suitcase directly or indirectly as a means of support for the back or as a handle for the hands to hold onto.

With this solution, a single person can without difficulty transport a small child, an improved small wheeled suitcase as stated above and also, if necessary, a larger wheeled suitcase and can negotiate all operations of getting onto and off the vehicle with relative ease.

Other features of the invention, and the advantages it offers, will be seen in the following description which refers to the figures of the attached sheets of drawings, in which:
- Figure 1 is a perspective view of an improved suitcase according to the innovation, in the condition of use in which the guide shaft or shafts are being used as a support for the backrest of the seat fitted to the said suitcase;
- Figs. 2 and 3 illustrate the suitcase as in Figure 1, with the seat folded away in different positions for storage or for carrying the suitcase by means of the various hands with which it is provided; and
- Fig. 4 is a side view of an improved suitcase according to the innovation, in the condition of use in which the child is holding onto the guide shaft or shafts as a means of support.

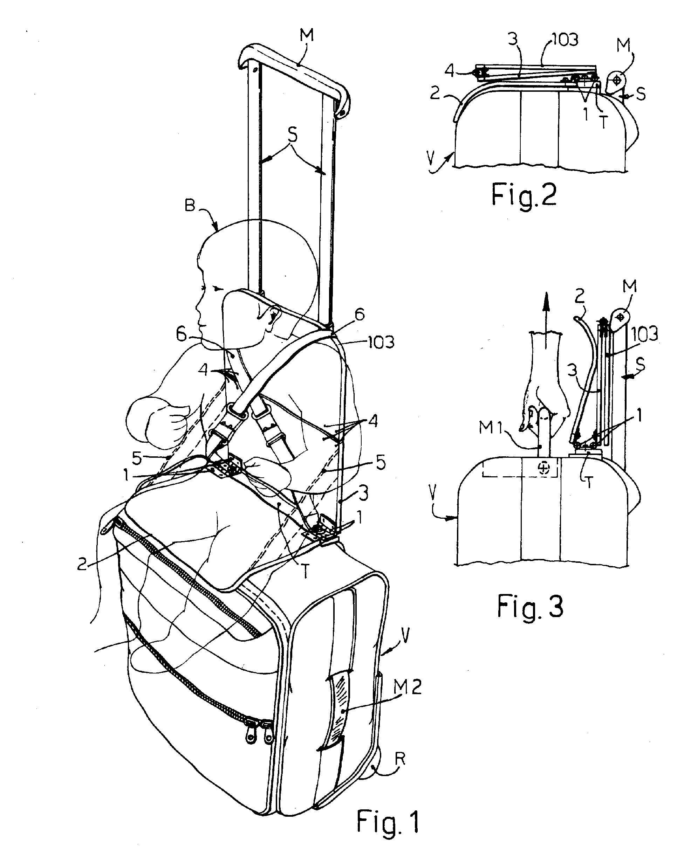

Figures 1, 2 and 3 show schematically a semirigid wheeled suitcase V of the type produced for example by Samsonite (registered trademark), reinforced both internally and externally by a very strong frame and having sturdy wheels R at the ends of a large lower side, while on the corresponding top side it has a handle M connected to one or two parallel telescopic shafts S, which if required can be extended from the said frame internal to the suitcase to allow the latter to be rolled along on the said wheels R. Parallel to and at a short distance from the handle M when lowered, the suitcase has on top a rigid crossmember T which forms part of the said reinforcing frame or may be fixed to it. A short distance from this crossmember T, the suitcase has in the centre of the top wall a retractable handle M1 and auxiliary handles M2 are provided centrally on one or both vertical sides of the suitcase V.

In a suitcase of this type or in similar suitcases, including those of rigid type, the innovation provides for the optionally hinged attachment to the crossmember T, by means of hinges 1, of a seat base part 2 that rests on the top wall of the suitcase, and at least one backrest part 3 of limited height that can be positioned for use vertically, resting against the shafts S, to which it can preferably be fixed temporarily, as for example with a spring-loaded action with elastic forks or with small Velcro tapes, not illustrated in the drawings. In the present example, a vertical extension 103 is hinged by means of external hinges 4 to the backrest part 3 and remains in stable alignment with the part 3 when raised, so that it does not require means of fixing it to the shafts S because in the raised position the bottom edge of this extension rests on the top edge of the backrest 3 and it cannot therefore rotate downwards. A small child B can be comfortably seated and carried on the structure 2, 3, 103 with his or her back resting against the components 3, 103. If necessary, the seat base part 2 can be connected to the backrest 3 by means of flexible straps or jointed parts 5 that form effective containment walls for the child B who is held on the resulting seat by means of straps 6 arranged in any suitable way, such as being anchored at one end to the hinges 1. The straps 6 may for example cross over in front of the child's chest and may for example be designed to be able to be connected to each other behind the shafts S, for example by quick-release means.

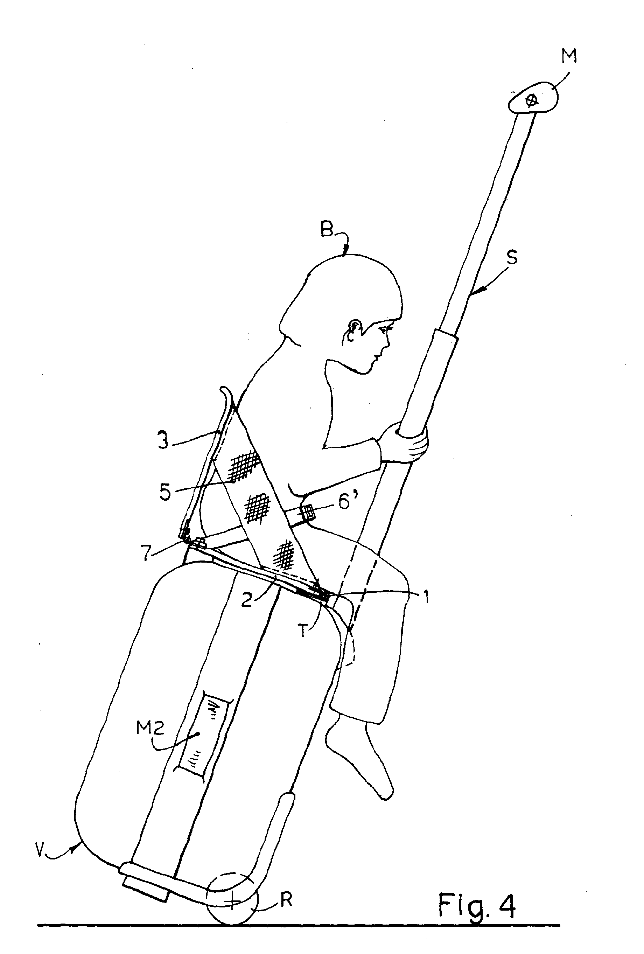

As Figure 2 shows, when the seat is not in use, the backrest part 3, 103 can be folded down to save space on the seat base part 2 and the whole can stay resting on the top wall of the suitcase if the suitcase is to be transported by means of the shafts and handle M or by means of the side handles M2. If, on the other hand, the case is to be transported by means of the top handle M1, the assembly 2, 3, 103 can be rotated on the hinges 1 and can be placed against the lowered shafts S, as illustrated in the example of, Figure 3.

In the version shown in Figure 4, the seat 2 is connected to the crossmember T by means of for example the usual hinges 1 which allow access to the top handle M1 as noted earlier with reference to Figure 3, whereas, unlike the previous version, the seat is now hinged on the side furthest from that connected to the said crossmember T, by means of further hinges 7, to the backrest part 3 which is connected to the seat at the sides by means of the flexible or jointed walls 5 referred to earlier. These walls 5 act not only as lateral containment parts but can now function as means for stabilizing the position of the backrest when in use. The child B sitting on the seat 2, 3, 5 in Figure 4 is now facing forwards towards the shafts S, with his or her legs either side of or between these shafts and able to grip the shafts securely with his or her hands, even if the child is sufficiently securely attached to the seat 2 by suitable straps 6'.

It should be understood that suitable means may be provided to fasten together and to the suitcase the various component parts of the seat when the latter is in the position of rest as in Figures 2 and 3. Alternatively the seat may be fixed removably to the suitcase, for example by means of clamps which may be fixed or anchored with or without play, to the lower part of the shafts S, in such a way that the seat of the innovation can be put in position when required but can also be removed and stored away compactly when not required. The fold-away seat may optionally also be provided with a component of flexible or at any rate compactable material (not shown) for use as a footrest.

## Claims

1. Wheeled suitcase **characterized in that** it is equipped with a seat (2, 3), resting on the top wall of the said suitcase (V), in which seat (2, 3) it is possible to place a small child (B) who is held securely in place by means of straps (6, 106, 6'), in such a way that the suitcase can also be used temporarily as a pram.

2. Suitcase according to Claim 1, in which the seat (2, 3) can be folded away.

3. Suitcase according to Claim 1, in which the seat is positioned with its backrest (3) facing, and at a suitable distance from, the shafts (S) of the said suitcase, in such a way that the child can place his or her legs either side of or between the said shafts and can grasp them firmly in his or her hands.

4. Suitcase according to Claim 1, in which the seat is positioned with its backrest (3) resting against the lower part of the shafts (S) which therefore also take part of the weight of the seated child.

5. Suitcase according to Claim 4, in which the seat comprises a seat base part (2) which rests on the top wall of the said suitcase and which is hinged by means of hinges (1) to a backrest part (3), which can be folded down onto the seat base and which in the raised position of use rests against the shafts of the said suitcase, means being provided for attaching any one or more parts of the said seat to any suitable part of the suitcase (V).

6. Suitcase according to Claim 5, in which the hinges (1) connecting the seat base (2) to the backrest (3) are fixed directly or indirectly to an upper crossmember. (T) that belongs to the stiffening structure of the suitcase (V) or that can be fixed to the latter.

7. Suitcase according to Claim 5, in which the backrest part (3) is provided with means for its removable connection to the shafts (S) of the said suitcase (V).

8. Suitcase according to Claim 5, in which the backrest part (3) has dimensions such that when it is folded down onto the seat base (2), it is wholly or largely within the projection in plan view of this component.

9. Suitcase according to Claim 8, in which there is hinged to the backrest part (3) by suitable hinges (4) on the opposite side from that hinged to the seat base part (2), an extension (103) which in the rest position folds down onto the rear face of the backrest and in the use position is coplanar with said backrest, resting at the bottom on the latter and at the rear on the shafts (S) of the suitcase (V).

10. Suitcase according to Claim 5, in which the seat base part (2) can be connected at the sides to the backrest part (3) by means of flexible or jointed bands (5) useful as means for lateral containment of the seated child.

11. Suitcase according to Claim 5, in which the ends of straps (6) with which it is possible to fasten the child securely to the said seat are anchored to the hinges (1) connecting the seat base part (2) to the backrest part (3) or to some other position of the seat near these hinges, and to the shafts (S).

12. Suitcase according to Claim 6, in which the hinges (1) connecting the seat base part (2) to the backrest part (3) and which connect the entire seat to the said suitcase, are such as to allow the seat base itself to rotate towards the shafts (S) when the handle (M1) on top of the suitcase (V) is to be used.

13. Suitcase according to Claim 3, **characterized in that** it comprises a seat base part (2) that rests on the top wall of the said suitcase, that is attached by any suitable means (1) to any part of the said suitcase and that is hinged like a book on the side furthest from the shafts (S), by means of hinges (7), to a backrest part (3) that can be folded down on to the said seat or that can be moved away angularly from the latter by at least ninety degrees and means (5) being provided to keep the backrest in this position of use, while suitable belts (6') are provided to hold the child on the seat constructed in this manner.

14. Suitcase according to claim 2, **characterized in that** it is provided with straps or other suitable means so that the various component parts of the seat can be secured in the fold-away position when this component is not being used.

15. Suitcase according to claim 1, **characterized in that** it can be provided with a fold-away means useful as a footrest for the child sitting on the seat fitted to the said suitcase (V).
